# EUROPEAN PATENT SPECIFICATION

(11) **EP 2 882 805 B1**
(45) Date of publication and mention of the grant of the patent: **28.06.2017**
(21) Application number: 12799052.1
(22) Date of filing: 31.10.2012
(51) Int. Cl.: C08L 23/12, B29B 15/12, C08J 5/10, C08K 5/14, C08K 5/54, C08J 5/04, B29K 23/00

(54) **COMPOSITE WITH SYNTHETIC POLYMERIC MATRIX AND CELLULOSE IN THE FORM OF NATURAL FIBRE FILLERS**
VERBUNDWERKSTOFF MIT SYNTHETISCHER POLYMERMATRIX UND CELLULOSE IN FORM VON NATÜRLICHEN FASERFÜLLSTOFFEN
COMPOSITE CONTENANT UNE MATRICE POLYMÈRE SYNTHÉTIQUE ET DE LA CELLULOSE SOUS FORME DE CHARGE DE FIBRES NATURELLES

(30) Priority: 20.12.2011 CZ 201100852 U
(43) Date of publication of application: 17.06.2015
(73) Proprietor: Techniká Univerzita V Liberci - Katedra Strojírenské Technologie, Oddelení Tvárení Kovu a Zpracovaní Plastu, 461 17 Liberec 1 (CZ); Magna Exteriors&Interiors (Bohemia) S.r.o., 46078 Liberec (CZ)
(72) Inventor: LENFELD, Petr, 460 11 Liberec (CZ); AUSPERGER, Ales, 503 01 Hradec Králové (CZ); BEHÁLEK, Lubos, 460 15 Liberec (CZ); BOBEK, Jiri, 460 14 Liberec (CZ); LUKES, Michal, 514 01 Jestsabí v Krkonosích (CZ); SEIDL, Martin, 500 03 Hradec Králové (CZ); SEVERA, Zdenek, 460 15 Liberec 15 (CZ)
(74) Representative: Jeck, Anton
(86) International application number: PCT/CZ2012/000109
(87) International publication number: WO 2013/091586

(56) References cited:
- EP-A1- 1 990 362
- EP-A1- 2 226 171
- WO-A1-2010/023054
- US-A1- 2009 306 253
- US-A1- 2010 029 809

## Description

### Technology area

This technical solution regards the composition of the polymeric composite with natural fibre fillers on the basis of cellulose for the manufacture of plastic parts with higher utility properties.

### Present condition of technology

Polymeric materials and their composites belong to the most progressively developing materials because the polymeric materials represent the most important segment of the production and consumption by volume between all technical materials and there is no doubt that they are crucial to modern technical society. The current development of polymeric materials and their processing technologies will continue in increasing volume and the success of individual materials developed by basic and applied research will be crucially influenced by the ratio between the price and the utility value of the material. This research area also includes the replacement of glass fibres by natural fibres which are from the environmental point of view the subject of interest of polymer processors. Application of natural fibres is a significant material change which traditionally aims not only for the automotive industry, but also to the areas of consumer industry, medical applications, etc. The advantage of natural fibres is, in comparison with other fibrous materials (used in the manufacture of composites), their low weight, low abrasion (preventing the wear of the processing machines), burning, nontoxicity, biodegradability, and in particular, the low price, independent of the price of oil.
Now the natural fibres are used in the industry as the reinforcement of shaped large-scale parts, e.g. wooden sawdust, containing cellulose fibres and nonwoven linen materials with the polypropylene. It should be emphasized that these are especially the products resulting from pressing, not from their injection, where they are subjects to high demands on quality, dimensional and shape precision of manufactured parts. The injection of synthetic composites with natural fillers is so far very few examined area with large possibilities and the potential for significant growth, and also this proposed technical solution is heading this area. Historically, the application of composites may be dated from the year 1908, when the composite material based on phenolic resin reinforced with wood flour was used for the first time (L. Baekeland). By the development of glass fibre of company Owens-Illincis Glass Co. (1933) the first fibreglasses were appearing, i.e. polymeric composites with glass fibres, e.g. coverings of aircraft radar (1942) or the parts of the bodywork of cars (1956, comp. Citroen), etc. In addition to glass fibre also the carbon, wood, ceramic fibres, etc. were applied for reinforcing purposes during the development of polymer composites. The hidden reality of today is the use of natural fibres for the production of polymeric composites used for the production of large-scale components of the internal padding and of the external parts of the bodywork of cars and other transport technologies. The share of bicomposites increases each year, but there is still few technical solutions and options. Especially the hemp, jute, flax, cotton, sisal, and wood are the most commonly used natural fibres. Known applications are components in a Mercedes C class, Daimler AG. (e.g. panels of the doors and acoustic insulation), the rear cover of bus engine, made from mat of natural fibres, etc.
The proposed technical solution responds to the growing demand and requirements relating to these materials, which are, however, in the Czech Republic, very little extended. Pressure on the applications of such materials is constantly growing, and not only as a result of the economic situation (the price of oil is still changing, but mainly grows), not only due to the possibilities of influencing of the final and utility characteristics of the products, but also in terms of climate change (almost unsolved recycling of existing parts of the synthetic plastics, synthetic plastics incineration, landfilling).

WO 2010/03054 A1 teachers composition comprising a protein and the starter as well as methods of making and using the composition. The composition is used in an adhesive, binder of coating. Also the composition is used as an adhesive to enhance at least one of viscosity or bonding strength of the adhesive, binder or quoting

From US 2010/029809 A1 a composite material is knowing which is light weight, mechanically strong, and excellent in formability and water resistance and is capable of reducing environmental burden. The production method of the composite material composed of the natural vegetable fiber and synthetic polymer includes chemically bonding a molecule a chain of the synthetic polymer to a surface of the natural vegetable fiber, kneading the chemically bonded fiber and synthetic polymer of the type one of identical to and different from the synthetic polymer used in the chemical bonding, and forming the obtained kneaded material into a predetermined shape

US 2009306253 A1 discloses a fiber reinforced thermoplastic material containing airlaid cellulose fiber material and uses thereof.

EP 1990362 A1 relates to a polyolefin composition comprising man-made cellulose fibers of very home model was to improve the mechanical performance offset compositions while retaining a low-density.

EP 2226171 A1 teachers are cellulose fiber composite having a high transparency, low water absorption and low coefficient of linear thermal expansion.

### Principle of technical solution

This technical solution aims the creating of a composite with the targeted composition of the matrix, additive and filler on the basis of natural materials for the improvement of final and utility properties of the plastic parts with higher added value and environmentally much lower capacity, compared to the 100% synthetic products, i.e. with the environmental benefits. The essence of the technical solution lies in the fact that the composite contains from 58,5 to 88,5 weight % of polypropylene, from 10 to 40 weight % of natural fibres of cellulose (the length of the fibres from 0,2 to 2 mm) and from 1 to 1 ,5 weight % of silicon-based additive and from 0,1 to 0,5 weight % of additive based on dialkyl peroxides, which acts as a chemical catalyst. The obtained composite is supplied in the form of granules and is designed for a wide range of technologies for processing of plastics, for example injection.

### Examples of technical solution conduct

Polymeric composite with natural fibre fillers on the basis of the cellulose is described in the following examples, including an indication of the appropriate application, whereas the component A consists of polypropylene, component B of natural fibre cellulose (the length of the fibres from 0.2 to 2 mm), component C of additive based on silicon, component D of additive based on dialkyl peroxides.

### Option 1:

Component A: 88,5 weight % of polypropylene
Component B: 10 weight % of natural fibres of cellulose
Component C: 1,5 weight % of additive based on silicon
Component D: 0,2 weight % of additive based on dialkyl peroxides

### Option 2:

Component A: 78,5 weight % of polypropylene
Component B: 20 weight % of natural fibres of cellulose
Component C: 1,5 weight % of additive based on silicon
Component D: 0,2 weight % of additive based on dialkyl peroxides

### Option 3:

Component A: 68,5 weight % of polypropylene
Component B: 30 weight % of natural fibres of cellulose
Component C: 1,5 weight % of additive based on silicon
Component D: 0,2 weight % of additive based on dialkyl peroxides

### Option 4:

Component A: 58,5 weight % of polypropylene
Component B: 40 weight % of natural fibres of cellulose
Component C: 1,5 weight % of additive based on silicon
Component D: 0,2 weight % of additive based on dialkyl peroxides

Polymeric composite with natural fibre fillers based on cellulose can be advantageously used for the production of plastic parts by different technological processes, which are characterized by improved utility and final characteristics, for example mechanical properties, dimensional stability, etc., economic savings, shorten production cycles, environmental aspects, etc.

### Industrial efficiency

Polymeric composite with natural fibre fillers based on cellulose according to this technical solution is suitable for the production of plastic parts by different technological processes.

## Claims

1. Polymeric composite with natural fibre fillers on the basis of the cellulose for the production of plastics parts **characterized in that** the composite contains from 58,5 to 88,5 weight % of polypropylene, from 10 to 40 weight % of natural fibres of cellulose and from 1 to 1,5 weight % of silicon- based additive and from 0,1 to 0,5 weight % of additive based on dialkyl peroxides,
**characterized in,**
**that** the natural fibres of cellulose have a length of 0,2 to 2 mm.

## Patentansprüche

1. Polymerverbundstoff mit Naturfaserfüllungen auf der Basis von Zellulose für die Herstellung von Plastikteilen,
**dadurch gekennzeichnet,**
**dass** der Verbundstoff 58,5 - 88,5 Gew.% Polypropylen, 10 - 40 Gew.% Naturfasern von Zellulose, 1 - 1,5 Gew.% silikonbasierte Additive und 0,1 - 0,5 Gew.% von additivbasierten Dialkylperoxiden enthält, die als chemische Katalysatoren wirken, und
**dass** die Länge der Fasern 0,2 - 2 mm beträgt.

## Revendications

1. Composite de polymère avec fourrages de fibres naturelles sur base de cellulose pour la production de pièces en plastique,
Est caractérisée de sorte que
La composite contient du polypropylène (poids 58,5-88,5 %), des fibres naturelles de cellulose (poids 10-40 %), des additifs à base de silicone (poids 1-1,5 %) et des peroxydes de dialkyle à base d'additifs (poids 0,1-0,5 %) agissant en qualité de catalyseurs chimiques et que la longueur des fibres atteint 0,2-2mm.
